# EUROPÄISCHE PATENTSCHRIFT

(11) **EP 2 098 412 B1**
(45) Veröffentlichungstag und Bekanntmachung des Hinweises auf die Patenterteilung: **06.06.2012**
(21) Anmeldenummer: 09002321.9
(22) Anmeldetag: 19.02.2009
(51) Int. Cl.: B60R 9/06, B60R 9/10

(54) **Lastenträger**
Load bearer
Support de charge

(30) Priorität: 05.03.2008 DE 102008012689
(43) Veröffentlichungstag der Anmeldung: 09.09.2009
(73) Patentinhaber: WESTFALIA - Automotive GmbH, 33378 Rheda-Wiedenbrück (DE)
(72) Erfinder: von Hörsten, Ralf, 30900 Wedemark (DE)
(74) Vertreter: Bregenzer, Michael

(56) Entgegenhaltungen:
- EP-A- 2 017 131
- DE-A1- 4 320 975
- DE-A1- 4 435 595
- DE-A1- 10 144 550
- DE-A1- 10 339 449
- DE-A1- 10 352 644
- DE-A1-102005 049 340
- DE-A1-102007 023 495
- DE-B3-102005 054 059
- US-A1- 2001 008 331

## Beschreibung

Die Erfindung betrifft einen Lastenträger zum Aufladen einer Last, der an einem Heckbereich eines Kraftfahrzeugs, insbesondere eines Personenkraftwagens, befestigbar und im montierten Zustand vor den Heckbereich des Kraftfahrzeugs nach hinten vorsteht, gemäß dem Oberbegriff des Anspruchs 1, sowie eine eine Verpackungseinrichtung für einen solchen Lastenträger.

Am Heck eines Kraftfahrzeuges befestigbare Lastenträger, beispielsweise zum Aufladen eines Fahrrades, sind allgemein bekannt. Beispielsweise hat ein in der nicht vorveröffentlichten Patentanmeldung DE 10 2007 023 495 beschriebener Lastenträger einen Basisträger mit Trägerrinnen als Erweiterungsbauteilen, die seitlich vor den Basisträger ausschwenkbar sind, so dass beispielsweise Fahrräder auf jeweils ein Trägerrinnenpaar aufgestellt werden können. Die Patentanmeldung beschreibt einen Lastenträger, der in einen Heckbereich des Kraftfahrzeuges einschiebbar ist, sowie ferner einen vom Heckbereich des Kraftfahrzeugs entfernbaren Lastenträger, der beispielsweise an einem Kupplungsarm einer Anhängekupplung befestigbar ist. Zwar baut der Lastenträger auch in der Staustellung, wenn die Trägerrinnen beispielsweise zum Basisträger hingeschwenkt sind, relativ kompakt. Dennoch gestaltet sich sein Transport umständlich.

Aus EP 2 017 131 A1 geht ein Lastenträger für ein Kraftfahrzeug gemäß der eingangs genannten Art hervor. Der Lastenträger hat einen U-förmigen Bügel, der in Richtung eines Grundrahmens schwenkbar ist, so dass der Grundschenkel des U-förmigen Bügels geringfügig über einen Kennzeichenträger in der Staustellung hervorsteht.

Aus DE 44 35 595 A1 geht eine Vorrichtung zum Transportieren von Gütern hervor, die als Sackkarre mit Rädern ausgestaltet ist. Die Vorrichtung kann also zum Transportieren von Gütern, wie Fahrräder, Skier oder auch als Sackkarre eingesetzt werden.

Es ist daher die Aufgabe der vorliegenden Erfindung, einen Lastenträger und eine Verpackungseinrichtung für einen Lastenträger bereitzustellen, mit denen der Lastenträger in seiner Staustellung bequem handhabbar und transportierbar ist.

Zur Lösung der Aufgabe sind ein Lastenträger gemäß der technischen Lehre des Anspruchs 1 und eine verpackungseinrichtung gemäß der technischen Lehre des Anspruchs 11 vorgesehen.

Der erfindungsgemäße Gedanke ist, dass die Packstruktur paketartig ist, wobei ein bügelartiger oder henkelartiger Handgriff vor die Packstruktur vorsteht. Dieser Handgriff kann von einem Bediener bequem ergriffen werden, so dass der Lastenträger in seiner Staustellung bequem tragbar oder verfahrbar beziehungsweise auf einem Untergrund rollbar ist.

Der erfindungsgemäße Lastenträger baut vorzugsweise äußerst kompakt, so dass die Packstruktur in der Staustellung nicht nur eine kleine Grundfläche beansprucht, sondern auch ein geringes Volumen aufweist. Das erleichtert den Transport.

Ein bevorzugter erfindungsgemäßer Gedanke ist, den Lastenträger mit einer Verpackungseinrichtung, beispielsweise einer Tasche, einer Hülle oder einem Koffer, auszustatten, so dass ein Lastenträger-System gebildet ist. In der Verpackungseinrichtung kann der Lastenträger bequem transportiert werden und ist vor Umwelteinflüssen, beispielsweise Beschädigung, Staub und dergleichen, geschützt. Zudem ist vorteilhaft das Verletzungsrisiko verringert, weil eventuell scharfkantige Bestandteile des Lastenträgers in der Verpackungseinrichtung, beispielsweise einer taschenartigen Hülle, einem Koffer oder dergleichen, aufgenommen sind und nicht frei liegen.

Bei dem Lastenträger und/oder der Verpackungseinrichtung ist eine Rollenanordnung oder Räderanordnung vorgesehen. Mit Hilfe der Rollen oder Räder kann der Lastenträger bequem verfahren werden. Der Bediener ergreift den Lastenträger, der sich in seiner Staustellung befindet, an dem Handbügel und kann den Lastenträger auf der Rollenanordnung sozusagen hinter sich herziehen. Die Rollenanordnung kann an dem Lastenträger unmittelbar selbst, beispielsweise an dem Basisträger, einem Erweiterungsbauteil oder dergleichen, angeordnet sein. Eine zweckmäßige und besonders bevorzugte Variante der Erfindung sieht vor, dass die Verpackungseinrichtung mit einer Rollen- oder Räderanordnung ausgestattet ist. Die Rollen oder Räder können fest oder lösbar am Lastenträger oder der Verpackungseinrichtung angeordnet sein.

Der Handgriff wird beispielsweise durch den Basisträger und/oder durch das mindestens eine Erweiterungsbauteil gebildet. Es versteht sich, dass das Erweiterungsbauteil und der Basisträger in Zusammenwirkung einen Handgriff bilden können, beispielsweise durch in der Staustellung miteinander fluchtende Bauteile, zum Beispiel Träger- oder Rahmenbauteile.

Ferner ist es möglich, dass der Lastenträger mehrere henkelartige Handgriffe aufweist, beispielsweise ausschließlich am Basisträger, ausschließlich an dem mindestens einen Erweiterungsbauteil, oder auch an beiden vorgenannten Komponenten.

Der Handgriff wird zweckmäßigerweise durch eine Halterung, zum Beispiel einen Trägerbügel, gebildet, mit der eine Last am Lastenträger befestigbar ist. Die Halterung steht in der Arbeitsstellung beispielsweise winkelig von dem Basisträger ab, während sie in der Staustellung zu dem Basisträger hinbewegt oder hingeschwenkt ist.

Vorzugsweise ist eine Befestigungseinrichtung zum ortsfesten Festlegen der Halterung bezüglich des Basisträgers in der Staustellung vorgesehen, beispielsweise ein Band, eine Klemmeinrichtung, ein Feststellrad, eine Feststellschraube oder dergleichen. Die Befestigungseinrichtung kann ein Bauteil des Lastenträgers bilden oder auch der Verpackungseinrichtung.

Der Lastenträger umfasst zweckmäßigerweise ein Tragegestell zum Auflegen der Last, das an dem Basisträger beweglich gelagert ist. Auch wenn eine Last auf das Tragegestell aufgelegt ist, kann dieses vom Heckbereich des Kraftfahrzeuges weg bewegt, beispielsweise geschwenkt und/oder verschoben, werden, so dass das Heck des Kraftfahrzeuges leichter zugänglich ist. Somit kann beispielsweise eine Heckklappe leichter geöffnet werden.

Das mindestens eine Erweiterungsbauteil umfasst zweckmäßigerweise ein Tragteil zum Vergrößern eines Ladebereichs des Basisträgers. Das Tragteil kann beispielsweise an dem Tragegestell oder dem Basisträger beweglich gelagert sein, zum Beispiel schwenkbar und/oder verschiebbar. Auch ein Anstecken des Tragteils an das Tragegestell oder eine Steckaufnahme des Basisträgers ist möglich.

Vorzugsweise hat der Lastenträger mindestens eine Trägerrinne. Auf einer Trägerrinne kann ein Zweirad, zum Beispiel ein Fahrrad, Kleinkraftrad oder dergleichen, ohne weiteres aufgestellt werden. Die mindestens eine Trägerrinne bildet vorteilhaft einen Bestandteil einer Trägerrinnenanordnung. Beispielsweise hat der Lastenträger mindestens ein, zweckmäßigerweise zwei oder mehrere Trägerrinnenpaare mit Trägerrinnen.

Die Trägerrinnen sind bezüglich des Basisträgers und/oder des Ladegestells vorteilhaft beweglich, z.B. steckbar, verschieblich und/oders schwenkbar. Die Trägerrinnen stehen in der Arbeitsstellung von dem Basisträger ab und fluchten im Wesentlichen zueinander. In der Staustellung hingegen liegen die Trägerrinnen zweckmäßigerweise aufeinander, nebeneinander oder sind in sonstiger platzsparender Weise beispielsweise im Innenraum des Basisträgers und/oder des Ladegestells angeordnet.

Als Erweiterungsbauteil werden neben den vorgenannten Tragteilen, insbesondere Trägerrinnen, auch Leuchten, Kennzeichenträger und dergleichen verstanden, die in der Staustellung kompakt innerhalb der Packstruktur angeordnet sind.

Dementsprechend ist an dem Basisträger, insbesondere an dem Ladegestell, mindestens ein Lager zum schwenkbeweglichen und/oder schiebebeweglichen Lagern des jeweiligen Erweiterungsbauteils angeordnet. Auch eine Steckaufnahme zum Halten eines Erweiterungsbauteils, beispielsweise eines Kennzeichenträgers oder einer Heckleuchte, ist vorteilhaft. Schwenkbare Erweiterungsbauteile, insbesondere schwenkbare Leuchten, Kennzeichenträger etc., sind bevorzugt.

Bei dem Lastenträger können verschiedenartige Befestigungseinrichtungen zur Befestigung an dem Kraftfahrzeug vorgesehen sein, beispielsweise zur Befestigung an einem Kupplungsarm, z.B. an dessen Armabschnitt und/oder dessen Kugel, einer Anhängekupplung, zur Befestigung an einer sonstigen Halterung, zum Beispiel einer Steckaufnahme, einer Abschleppöse oder einer Abschleppösenhalterung des Kraftfahrzeugs, vorgesehen sein.

Ein weiteres, im Ausführungsbeispiel nicht dargestelltes Konzept sieht vor, dass eine Außenkontur der Packstruktur in der Staustellung an eine Innenkontur eines fahrzeugseitigen Stauraums des Kraftfahrzeugs angepasst ist, beispielsweise eine Reserveradmulde. Dazu haben beispielsweise der Basisträger und/oder das mindestens eine Erweiterungsbauteil in der Staustellung außenliegende Konturen, die mit der Innenkontur des fahrzeugseitigen Stauraums korrelieren. Zweckmäßigerweise ist die Außenkontur ganz oder zumindest im Wesentlichen an die Innenkontur des Stauraums angepasst. Beispielsweise ist die Packstruktur außen gerundet oder rund, so dass sie in die Reserveradmulde passt. Es versteht sich, dass auch eine Anpassung an anderweitige Stauräume des Kraftfahrzeugs zweckmäßig ist, beispielsweise eine Anpassung an ein Seitenfach in einem Gepäckabteil des Kraftfahrzeugs, einen Stauraum unterhalb eines klappbaren Sitzes des Kraftfahrzeuges, an einen außenliegenden Stauraum, z.B. zur Aufnahme eines Reserverads, oder dergleichen.

Die Verpackungseinrichtung hat eine Öffnung, durch die der Handgriff vor die Verpackungseinrichtung vorsteht.

Bei der Verpackungseinrichtung ist es vorteilhaft, wenn sie eine Tasche zur Aufnahme eines Bauteils des Lastenträgers aufweist, beispielsweise zur Aufnahme einer Heckleuchte oder dergleichen. Die Tasche kann außen oder vorzugsweise in einem Innenraum der Verpackungseinrichtung angeordnet sein.

Nachfolgend wird ein Ausführungsbeispiel der Erfindung anhand der Zeichnung erläutert. Es zeigen:
- Figur 1: eine perspektivische Schrägansicht eines an einem Heck eines Kraftfahrzeugs befestigten Lastenträgers in einer vom Kraftfahrzeug teilweise weggeschwenk- ten Ladestellung,
- Figur 2: den Lastenträger gemäß Figur 1 in einer Stau- stellung,

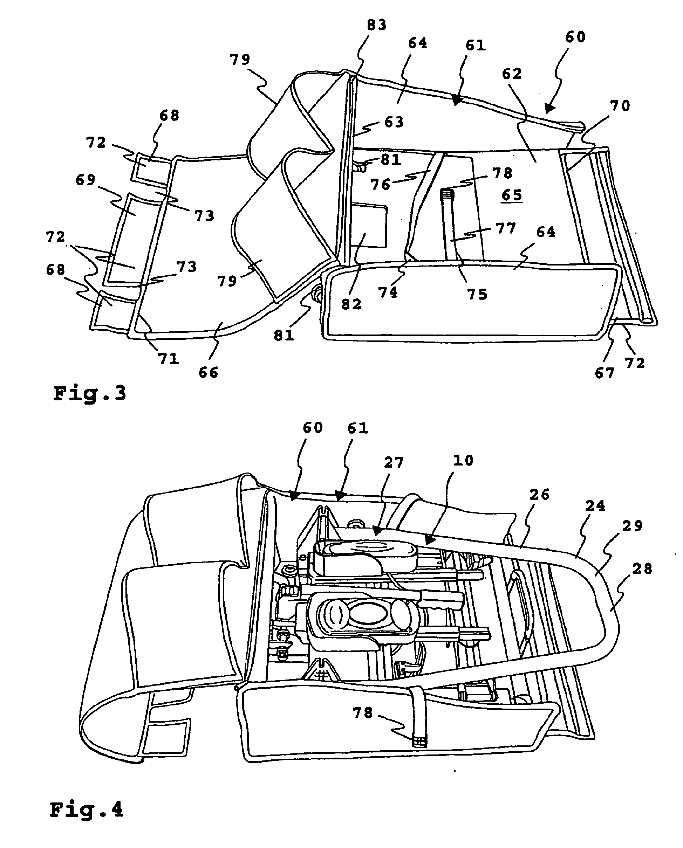

- Figur 3: eine Verpackungseinrichtung in Gestalt einer Trolley-Tasche für den Lastenträger gemäß Figur 2 in geöffnetem Zustand,
- Figur 4: den Lastenträger gemäß Figur 1 in der Verpackungs- einrichtung gemäß Figur 3, wobei diese geöffnet ist,
- Figur 5: den in der Verpackungseinrichtung liegenden Lasten- träger gemäß Figur 4, wobei die Verpackungseinrich- tung zumindest teilweise geschlossen ist, und
- Figur 6: den Lastenträger und die Verpackungseinrichtung in Stau- oder Transportstellung.

Ein Lastenträger 10 dient zum Aufladen einer Last, beispielsweise zweier nicht dargestellter Fahrräder. Der Lastenträger 10 ist an einem Heckbereich 11 eines Kraftfahrzeuges 12, beim Ausführungsbeispiel eines Personenkraftwagens, mittels einer Befestigungseinrichtung 13 befestigbar. Die Befestigungseinrichtung eignet sich zum Verspannen an einem Kugelkopf 14 am freien Ende eines Kupplungsarms 15 einer Anhängekupplung 16. Der Kupplungsarm 15 steht nach hinten vor den Heckbereich 11 vor. Die Befestigungseinrichtung 13 ist mittels eines Hebelarms 17 betätigbar.

Die Befestigungseinrichtung 13 ist an einem Grundschenkel 19 eines U-förmigen Basisträgers 28 des Lastenträgers 10 angeordnet. Vor den Grundschenkel 19 stehen Seitenschenkel 20 in der Art von Schenkelarmen nach hinten vor das Kraftfahrzeug 12 vor.

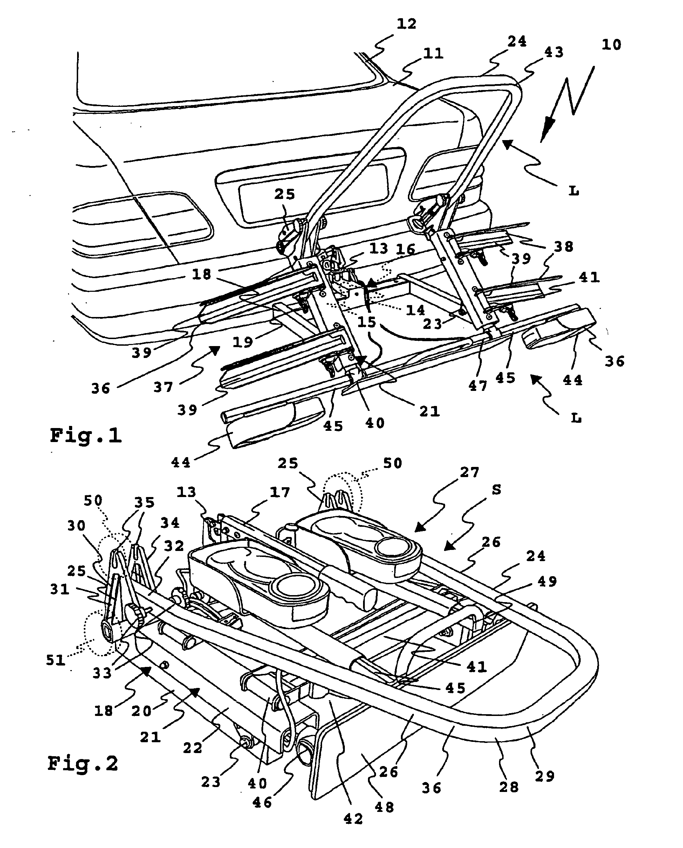

Der Basisträger 18 trägt ein Tragegestell 21, das bezüglich des Basisträgers 18 schwenkbar ist. Tragarme 22 des Tragegestells 21 sind mit Schwenklagern 23 schwenkbar am Basisträger 28 gelagert. Die Schwenklager 23 befinden sich an vorderen, freien Enden der Seitenschenkel 20, so dass das Tragegestell 21 vom Heckbereich 11 weg in eine Ladestellung L geschwenkt werden kann (siehe Figur 1). In einer nicht dargestellten Fahrstellung hingegen liegen die Tragarme 22 des Tragegestells 21 auf den Seitenschenkeln 20 auf, was beispielsweise in Figur 2 sichtbar ist.

Die beiden Tragarme 22 sind an ihren von den Schwenklagern 23 abgewandten Endbereichen mittels eines Trägerbügels 24 miteinander verbunden. Der Trägerbügel 24 ist an Schwenklagern 25 bezüglich der beiden Tragarme 22 schwenkbar. Somit kann der Trägerbügel 24 zwischen einer Arbeitsstellung A (Figur 1), in der er winkelig, vorzugsweise rechtwinkelig bezüglich der Tragarme 22 ist, in eine Staustellung S geschwenkt werden (Figur 2), bei der Arme 26 des Trägerbügels 24 zu den Tragarmen 22 hingeschwenkt sind. Dadurch wird das Außenmaß des Lastenträgers 10 verkleinert, insbesondere seine Höhe verringert, so dass er eine kompakte Packstruktur 27 bildet.

In der Staustellung S steht ein bügelartiger Querabschnitt 28 des Trägerbügels 24 in der Art eines Handgriffs 29 vor die Packstruktur 27 vor, so dass der Lastenträger 10 bequem ergriffen und transportiert werden kann.

Die Schwenklager 23 umfassen Lagerböcke 30 mit Schwenk-Schiebe-Führungen 31, an denen freie Enden 32 des Trägerbügels 24 schwenkbar sowie linear verschieblich gelagert sind. Die freien Enden 32 des Trägerbügels 24 sind zwischen Schenkeln 34 der Lagerböcke 30 geführt. Somit kann der Trägerbügel 24 an den Lagerböcken 30 geschwenkt und zudem zumindest dann, wenn er etwa rechtwinkelig zu den Tragarmen 22 steht, linear verschoben werden.

An freien Enden der Schenkel 34 sind Halteaufnahmen 35 angeordnet, in die Befestigungseinrichtungen 33 am Trägerbügel 24 eingeführt werden können, wenn dieser im Wesentlichen senkrecht zu den Tragarmen 22 stehend in Richtung derselben linear verschoben wird. Die Befestigungseinrichtungen 33 umfassen Klemmschrauben, deren Bolzen in einer Befestigungsstellung der Befestigungseinrichtungen 33 in den Halteaufnahmen 35 aufgenommen sind. Durch Anziehen der Befestigungsschrauben klemmen deren Köpfe außen gegen den jeweils äußeren Schenkel 34.

Der Trägerbügel 24 bildet ein erstes Erweiterungsbauteil 36, das in der Arbeitsstellung A von dem Basisträger 18 absteht. Der lediglich den Trägerbügel 24 sowie das Tragegestell 21 aufweisende Lastenträger 10 könnte beispielsweise zum Aufladen einer Gepäckbox dienen. Die Funktionalität des Lastenträgers 10 ist jedoch weitaus höher. So sind weitere Erweiterungsbauteile 36 vorgesehen, die in der Arbeitsstellung A vom Basisträger 18 abstehen und beispielsweise einen Ladebereich 37 des Lastenträgers 10 vergrößern.

Der Ladebereich 37 kann mittels Trageteilen 38 vergrößert werden, die am Tragegestell 21 schwenkbar gelagert sind. Die Trageteile 38 umfassen Trägerrinnen 39. Jeweils zwei Trägerrinnen 39 sind mittels Schwenklagern 40 an einem Tragarm 22 angeordnet, wobei sich jeweils zwei Trägerrinnen 39 zur Bildung eines Trägerrinnenpaares 41 gegenüberliegen. Diese Trägerrinnen 39 fluchten in der Arbeitsstellung A miteinander, so dass ein Zweirad, beispielsweise ein Fahrrad, auf jeweils ein Trägerrinnenpaar 41 aufgestellt werden kann. Die Trägerrinnen 39 sind bei Nichtgebrauch in einen Innenraum 42 des Tragegestells 21 beziehungsweise des Basisträgers 18 einschwenkbar und stehen dann in ihrer Staustellung S nicht mehr vor eine Außenkontur des Basisträgers 18 beziehungsweise des Tragegestells 21 vor. Zudem liegen die Trägerrinnen 39 eines jeweiligen Trägerrinnenpaares 41 aufeinander, was ebenfalls Platz spart. Ein weiterer Vorteil ist dadurch gegeben, dass die aufeinanderliegenden Trägerrinnen 39 zum Auflegen einer Last geeignet sind.

Auf die Trägerrinnen 39 aufgestellte Fahrräder können an dem in Arbeitsstellung A geschwenkten Trägerbügel 24 befestigt werden, der dann eine Halterung 43 für eine am Lastenträger 10 befestigbare Last bildet.

Der Lastenträger 10 umfasst als weitere Erweiterungsbauteile 36 Leuchten 44. Die Leuchten 44 sind mit Steckarmen 45 in Steckaufnahmen 46 des Tragegestells 21 einsteckbar. Die Steckaufnahmen 46 sind freie, offene Enden eines durch ein Trägerrohr gebildeten Grundschenkels 47 des Tragegestells 21. Der Grundschenkel 47 erstreckt sich zwischen den beiden Schwenklagern 23. Bei Nichtgebrauch können die beiden Leuchten 44 in dem Innenraum 42 abgelegt werden, beispielsweise jeweils seitlich neben dem ebenfalls in den Innenraum 42 geschwenkten Hebelarm 17 der Befestigungseinrichtung 13.

Der Grundschenkel 47 dient ferner als Träger für einen Kennzeichenträger 48. Von dem Grundschenkel 47 oder dem Kennzeichenträger 48 steht ferner ein Handgriff 49 ab.

Der Transport des in Staustellung S befindlichen Lastenträgers 10 kann in einer zweckmäßigen, schematisch dargestellten Ausgestaltung der Erfindung dadurch erleichtert sein, dass optional an einem vom Handgriff 29 entfernten Bereich der Packstruktur 27 Räder oder Rollen 50 angeordnet sind. Beispielsweise können an den Lagerböcken 30 Rollen 50 befestigt sein. Zweckmäßigerweise können zum Beispiel die Halteaufnahmen 35 als Achslager für die Rollen 50 dienen.

Alternativ wäre es auch möglich, dass beispielsweise an den freien Enden des Grundschenkels 19 des Basisträgers 18 Rollen 51 angeordnet sind.

Beim Lastenträger 10 ist jedoch ein anderes, vorteilhaftes Transportkonzept realisiert:

Der in Staustellung S zur Packstruktur 27 gepackte Lastenträger 10 kann nämlich mittels einer Verpackungseinrichtung 60 in Gestalt einer Tasche 61 verpackt werden. Eine Rückwand 62 sowie ein Boden 63 und Seitenwände 64 begrenzen einen Innenraum 65 zur Aufnahme des Lastenträgers 10. Die Wände 62-64 können beispielsweise durch eine Kartonageneinlage oder dergleichen Versteifung versteift sein. Eine Versteifung ist aber nicht notwendig.

Der Innenraum 65 ist durch ein flexibles Vorderteil 66 sowie ein Oberteil 67, das von Verschlusslaschen 68, 69 am Vorderteil 66 übergriffen wird, verschließbar. Das Vorderteil 66 kann entlang einer Biegekante 83 bezüglich des Bodens 63 geschwenkt werden.

Das Oberteil 67 ist an einer Biegekante 70 bezüglich der Rückwand 62 schwenkbar. Die Verschlusslaschen 68, 69 sind an einer Biegekante 71 bezüglich des Vorderteils 66 schwenkbar. So können das Oberteil 67 sowie die Verschlusslaschen 68, 69 zum Innenraum 65 hin geschwenkt werden, so dass sie aufeinander zu liegen kommen. Die Verschlusslaschen 68, 69 einerseits und das Oberteil 67 andererseits haben an ihren einander zugewandten Seiten jeweils zweckmäßigerweise Klettverschlüsse 72.

Zwischen den Verschlusslaschen 68 und 69 ist jeweils eine Öffnung 73 vorgesehen, die im geschlossenen Zustand der Tasche 61 von den Armen 26 des Trägerbügels 24 durchdrungen werden. Im geschlossenen Zustand der Tasche 61 steht dann der Querabschnitt 28 des Trägerbügels 24 vor die Außenseite der Tasche 61 vor, so dass der Lastenträger 10 mit der ihn umhüllenden Tasche 61 bequem ergriffen und transportiert werden kann.

Im Innenraum 65 ist zweckmäßigerweise eine Halterung 74 zum Halten des Lastenträgers 10 vorgesehen. Die Halterung 74 umfasst eine Riemen- oder Gurtanordnung 75 zum Umschlingen des Lastenträgers 10. Gurte 76, 77 der Gurtanordnung 75 sind jeweils in Übergangsbereichen zwischen der Rückwand 62 und den Seitenwänden 64 an der Tasche 61 befestigt, zweckmäßigerweise etwa längsmittig. Die Gurte 76, 77 werden zur Sicherung des Lastenträgers 10 im Innenraum 65 über den auf der Rückwand 62 liegenden Lastenträger 10 hinweg geführt und können mit einer Schließe 78 miteinander verbunden werden.

Bei dem Lastenträger 10 sind sämtliche Teile und insbesondere die Erweiterungsbauteile 36 innerhalb der kompakten Packstruktur 27 angeordnet und können mit der Gurtanordnung 75 insgesamt in dem Innenraum 65 gesichert werden.

Dennoch ist es zweckmäßig, dass an der Innenseite des Vorderteils 66 Innentaschen 79 zur Aufbewahrung weiterer Bauteile, beispielsweise von Halterungen, zum Beispiel für Befestigungseinrichtungen, Leuchtmittel und dergleichen, angeordnet sind. Solche Befestigungseinrichtungen können beispielsweise am Trägerbügel 24 befestigt werden und umfassen Klammern, Halteriemen und dergleichen zum Halten von Fahrradrahmen von auf die Trägerrinnen 39 aufgestellten Fahrrädern (nicht dargestellt).

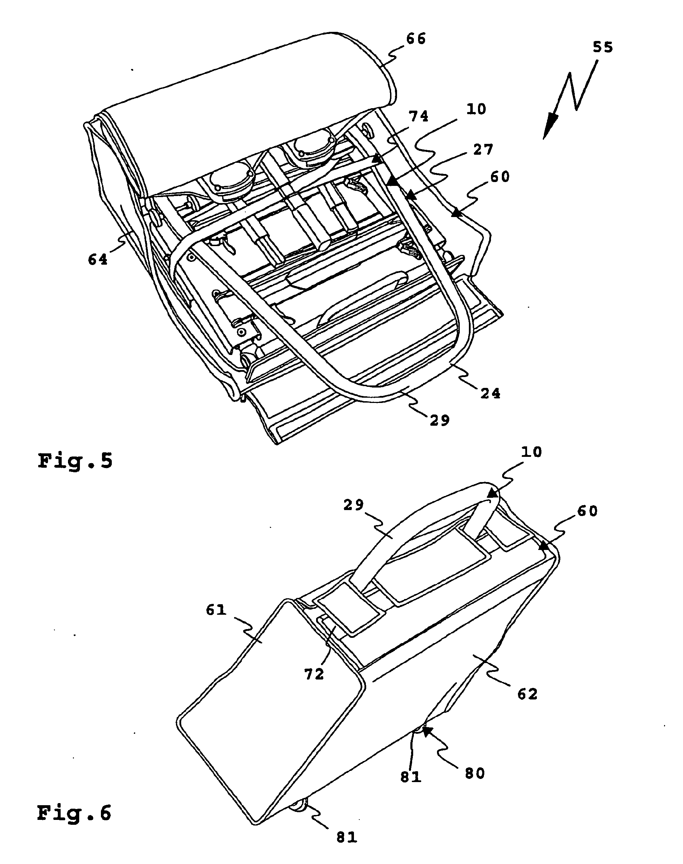

Der Transport des Lastenträgers 10 und der Verpackungseinrichtung 60, die insgesamt ein Lastenträger-System 55 bilden, wird durch eine Rollenanordnung 80 an der Verpackungseinrichtung 60 erleichtert. Rollen 81 der Rollenanordnung 80 sind drehbar in einem Eckbereich zwischen dem Boden 63 und der Rückwand 62 gelagert. Die Platzierung der Rollenanordnung 80 in einem Eck- oder Kantenbereich ermöglicht es, das Lastenträger-System 55 in der Art eines Trolleys (Figur 6) zu transportieren.

Selbstverständlich muss die Tasche 61 nicht vollständig geschlossen sein. So ist beispielsweise an der Rückwand 62 optional eine Öffnung 82 vorgesehen, durch die Bauteile, zum Beispiel der Befestigungseinrichtung 13, vor eine Außenkontur der Tasche 61 vorstehen können.

## Patentansprüche

1. Lastenträger zum Aufladen einer Last, der an einem Heckbereich (11) eines Kraftfahrzeugs (12), insbesondere eines Personenkraftwagens, befestigbar und im montierten Zustand vor den Heckbereich (11) des Kraftfahrzeugs (12) nach hinten vorsteht, und der zwischen einer Arbeitsstellung (A) und einer Staustellung (S) verstellbar ist, wobei in der Arbeitsstellung (A) mindestens ein an einem Basisträger (18) beweglich angeordnetes oder an dem Basisträger (18) befestigbares Erweiterungsbauteil (36) von dem Basisträger (18) absteht und wobei das mindestens eine Erweiterungsbauteil (36) in der Staustellung (S) zu dem Basisträger (18) hinbewegt ist, so dass der Lastenträger (10) eine Packstruktur (27) bildet, die gegenüber der Arbeitsstellung (A) eine kleinere Fläche und/oder eine kleinere Höhe beansprucht, wobei der Lastenträger (10) einen in seiner Staustellung (S) vor die Packstruktur (27) vorstehenden henkelartigen Handgriff (29) zum manuellen Ergreifen aufweist, **dadurch gekennzeichnet, dass** er mindestens eine Rolle (50, 51) oder ein Rad zum Fahren des Lastenträgers (10), insbesondere abseits des Kraftfahrzeugs (12), aufweist, wenn der Lastenträger (10) in der Staustellung (S) ist.

2. Lastenträger nach Anspruch 1, **dadurch gekennzeichnet, dass** der Handgriff (29) durch einen Abschnitt (28) des mindestens einen Erweiterungsbauteils (36) oder des Basisträgers (18) gebildet ist.

3. Lastenträger nach Anspruch 1 oder 2, **dadurch gekennzeichnet, dass** der Handgriff (29) durch eine Halterung (43), insbesondere einen Trägerbügel (24), für eine an dem Lastenträger (10) befestigbare Last gebildet ist, wobei der Lastenträger zweckmäßigerweise eine Befestigungseinrichtung zum ortsfesten Festlegen der Halterung (43) bezüglich des Basisträgers (18) in der Staustellung (S) aufweist.

4. Lastenträger nach einem der vorhergehenden Ansprüche, **dadurch gekennzeichnet, dass** er ein Tragegestell (21) zum Auflegen der Last umfasst, das an dem Basisträger (18) beweglich gelagert ist und im am Heckbereich (11) des Kraftfahrzeugs (12) befestigten Zustand mit aufgelegter Last von dem Heckbereich (11) zum leichteren Zugang zu einem Gepäckabteil des Kraftfahrzeugs (12) weg beweglich ist.

5. Lastenträger nach einem der vorhergehenden Ansprüche, **dadurch gekennzeichnet, dass** das mindestens eine Erweiterungsbauteil (36) ein Trageteil (38) zum Vergrößern eines Ladebereichs (37) des Basisträgers (18) umfasst und/oder dass das mindestens eine Erweiterungsbauteil (36) eine Trägerrinne (39) zur Aufnahme eines Rads eines Zweirads umfasst, wobei der Lastenträger zweckmäßigerweise ein Trägerrinnenpaar (41) mit in der Arbeitsstellung (A) im wesentlichen zueinander fluchtenden Trägerrinnen (39) aufweist.

6. Lastenträger nach einem der vorhergehenden Ansprüche, **dadurch gekennzeichnet, dass** das mindestens eine Erweiterungsbauteil (36) eine Leuchte (44) und/oder einen Kennzeichenträger (48) umfasst.

7. Lastenträger (10) nach einem der vorhergehenden Ansprüche, **dadurch gekennzeichnet, dass** an dem Basisträger (18) ein Lager (25, 40) zur schwenkbeweglichen und/oder schiebebeweglichen Lagerung des mindestens einen Erweiterungsbauteils (36) und/oder eine Steckaufnahme (46) zum Halten des mindestens einen Erweiterungsbauteils (36) angeordnet ist.

8. Lastenträger nach einem der vorhergehenden Ansprüche, **dadurch gekennzeichnet, dass** er eine Befestigungseinrichtung (13) zur Befestigung an einem Kupplungsarm (15) einer Anhängekupplung (16) des Kraftfahrzeugs (12) oder zur Befestigung an einer Halterung des Kraftfahrzeugs (12), insbesondere an einer Steckaufnahme oder einer Abschleppöse oder einer Abschleppösenhalterung, aufweist.

9. Lastenträger nach einem der vorhergehenden Ansprüche, **dadurch gekennzeichnet, dass** eine Außenkontur der Packstruktur (27) in der Staustellung (S) zumindest abschnittsweise an eine Innenkontur eines fahrzeugseitigen Stauraums des Kraftfahrzeugs (12) angepasst ist.

10. Lastenträger (10) nach einem der vorhergehenden Ansprüche **dadurch gekennzeichnet, dass** er einen Bestandteil eines Lastenträger-Systems bildet, das eine Verpackungseinrichtung (60) mit einer Öffnung umfasst, durch die der Handgriff (29) vor die Verpackungseinrichtung (60) vorsteht.

11. Verpackungseinrichtung (60) für einen Lastenträger (10) zum Aufladen einer Last, wobei der Lastenträger (10) an einem Heckbereich (11) eines Kraftfahrzeugs (12), insbesondere eines Personenkraftwagens, befestigbar und im montierten Zustand vor den Heckbereich (11) des Kraftfahrzeugs (12) nach hinten vorsteht, und wobei der Lastenträger (10) zwischen einer Arbeitsstellung (A) und einer Staustellung (S) verstellbar ist, wobei in der Arbeitsstellung (A) mindestens ein an einem Basisträger (18) beweglich angeordnetes oder an dem Basisträger (18) befestigbares Erweiterungsbauteil (36) von dem Basisträger (18) absteht und wobei das mindestens eine Erweiterungsbauteil (36) in der Staustellung (S) zu dem Basisträger (18) hinbewegt ist, so dass der Lastenträger (10) eine Packstruktur (27) bildet, die gegenüber der Arbeitsstellung (A) eine kleinere Fläche und/oder eine kleinere Höhe beansprucht, wobei der Lastenträger (10) einen in seiner Staustellung (S) vor die Packstruktur (27) vorstehenden henkelartigen Handgriff (29) zum manuellen Ergreifen aufweist, **dadurch gekennzeichnet, dass** die Verpackungseinrichtung (60) eine Öffnung aufweist, durch die der Handgriff (29) des verpackten Lastenträgers (10) vor die Verpackungseinrichtung (60) vorsteht, und dass die Verpackungseinrichtung (60) eine Räder- oder Rollenanordnung (80) zum Rollen des in der Verpackungseinrichtung (60) verpackten, in der in der Staustellung (S) befindlichen Lastenträgers (10) aufweist und/oder dass die Verpackungseinrichtung (60) und der in der Verpackungseinrichtung (60) verpackte, in der in der Staustellung (S) befindliche Lastenträger (10) einen Trolley bilden.

12. Verpackungseinrichtung nach Anspruch 11, **dadurch gekennzeichnet, dass** sie eine Halterung (74), insbesondere eine Gurtanordnung (75), zum Halten des Lastenträgers (10) in der Staustellung (S) aufweist und/oder dass die Verpackungseinrichtung (60) mindestens eine Tasche, vorzugsweise eine in einem Innenraum (65) der Verpackungseinrichtung (60) angeordnete Innentasche (79), zur Aufnahme eines Bauteils des Lastenträgers (10) aufweist.

13. Kraftfahrzeug (12), insbesondere Personenkraftwagen, mit einem Lastenträger (10) nach einem der Ansprüche 1 bis 10.

## Claims

1. Load carrier for placing a load, which load carrier can be secured to a rear region (11) of a motor vehicle (12), in particular of a passenger car, and which, in the mounted state, projects rearwards in front of the rear region (11) of the motor vehicle (12), and which can be adjusted between a working position (A) and a stowage position (S), wherein in the working position (A) at least one extension part (36) which is movably mounted on a base carrier (18) or can be secured to the base carrier (18) protrudes from the base carrier (18), and wherein the at least one extension part (36) is in the stowage position (S) moved towards the base carrier (18), so that the load carrier (10) forms a package structure (27) which requires a smaller surface area and/or a smaller height than in the working position (A), wherein the load carrier (10) has a hoop-type handle (29) which projects in front of the package structure (27) in its stowage position (S) for manual gripping, **characterised in that** it comprises at least one roller (50, 51) or a wheel for driving the load carrier (10), in particular away from the motor vehicle (12), when the load carrier (10) is in its stowage position (S).

2. Load carrier according to claim 1, **characterised in that** the handle (29) is represented by a section (28) of the at least one extension part (36) or of the base carrier (18).

3. Load carrier according to claim 1 or 2, **characterised in that** the handle (29) is represented by a holder (43), in particular by a carrier bracket (24), for a load to be secured to the load carrier (10), wherein the load carrier expediently comprises a mounting device for the location of the holder (43) with respect to the base carrier (18) in the stowage position (S).

4. Load carrier according to any of the preceding claims, **characterised in that** it comprises a carrying frame (21) for placing the load, which carrying frame (21) is movably mounted on the base carrier (18) and can be moved away from the rear region (11) for easier access to a luggage compartment of the motor vehicle (12) when it is secured to the rear region (11) of the motor vehicle (12) and a load has been placed on it.

5. Load carrier according to any of the preceding claims, **characterised in that** the at least one extension part (36) includes a carrying part (38) for increasing a loading area (37) of the base carrier (18), and/or **in that** the at least one extension part (36) includes a carrier groove (39) for accommodating a wheel of a two-wheeler, the load carrier expediently comprising a carrier groove pair (41) with carrier groves (39) which are substantially in alignment in the working position (A).

6. Load carrier according to any of the preceding claims, **characterised in that** the at least one extension part (36) includes a lamp (44) or a licence plate bracket (48).

7. Load carrier (10) according to any of the preceding claims, **characterised in that** a bearing (25, 40) for the pivotable and/or slidable mounting of the at least one extension part (36) and/or a receptacle (46) for holding the at least one extension part (36) is/are provided on the base carrier (18).

8. Load carrier according to any of the preceding claims, **characterised in that** it comprises a mounting device (13) for mounting on a coupling arm (15) of a trailer coupling (16) of the motor vehicle (12) or for mounting on a holder of the motor vehicle (12), in particular on a receptacle or a towing lug or a towing lug holder.

9. Load carrier according to any of the preceding claims, **characterised in that** an external contour of the package structure (27) is at least in some sections matched to an internal contour of a stowage space of the motor vehicle (12) in the stowage position (S).

10. Load carrier (10) according to any of the preceding claims, **characterised in that** it forms a part of a load carrier system, which comprises a packaging device (60) with an opening through which the handle (29) projects in front of the packaging device (60).

11. Packaging device (60) for a load carrier (10) for placing a load, wherein the load carrier (10) can be secured to a rear region (11) of a motor vehicle (12), in particular of a passenger car, and, in the mounted state, projects rearwards in front of a rear region (11) of the motor vehicle (12), and wherein the load carrier (10) can be adjusted between a working position (A) and a stowage position (S), wherein in the working position (A) at least one extension part (36) which is movably mounted on a base carrier (18) or can be secured to the base carrier (18) protrudes from the base carrier (18), and wherein the at least one extension part (36) is in the stowage position (S) moved towards the base carrier (18), so that the load carrier (10) forms a package structure (27) which requires a smaller surface area and/or a smaller height than in the working position (A), wherein the load carrier (10) has a hoop-type handle (29) which projects in front of the package structure (27) in its stowage position (S) for manual gripping, **characterised in that** the packaging device (60) has an opening through which the handle (29) of the packaged load carrier (10) projects, and **in that** the packaging device (60) has a wheel or roller arrangement (80) for rolling the load carrier (10) when packaged in the packaging device (60) and placed in the stowage position (S), and/or **in that** the packaging device (60) and the load carrier (10) packaged in the packaging device (60) and placed in the stowage position (S) form a trolley.

12. Packaging device according to claim 11, **characterised in that** it comprises a holder (74), in particular a belt arrangement (75) for holding the load carrier (10) in the stowage position (S), and/or **in that** the packaging device (60) comprises at least one pocket, preferably an interior pocket (79) located in an interior (65) of the packaging device (60), for accommodating a component of the load carrier (10).

13. Motor vehicle (12), in particular passenger car, with a load carrier (10) according to any of claims 1 to 10.

## Revendications

1. Support de charge pour le chargement d'une charge, qui peut être fixé sur une zone arrière (11) d'un véhicule automobile (12), en particulier d'une voiture particulière et dépasse vers l'arrière à l'état monté de la zone arrière (11) du véhicule automobile (12), et qui peut être réglé entre une position de travail (A) et une position de retenue (S), sachant que dans la position de travail (A), au moins un composant d'élargissement (36) pouvant être fixé sur le support de base (18) ou disposé de manière mobile sur un support de base (18) dépasse du support de base (18) et sachant qu'au moins un composant d'élargissement (36) est déplacé dans la position de retenue (S) vers le support de base (18) de sorte que le support de charge (10) forme une structure d'emballage (27) qui sollicite une plus petite surface et/ou une plus petite hauteur par rapport à la position de travail (A), sachant que le support de charge (10) présente une poignée (29) de type anse dépassant dans sa position de retenue (S) de la structure d'emballage (27) pour la saisie manuelle, **caractérisé en ce qu'**il présente au moins une bobine (50, 51) ou une roue pour le déplacement du support de charge (10), en particulier à l'écart du véhicule automobile (12), lorsque le support de charge (10) est dans la position de retenue (S).

2. Support de charge selon la revendication 1, **caractérisé en ce que** la poignée (29) est formée par une section (28) d'au moins un composant d'élargissement (36) ou du support de base (18).

3. Support de charge selon la revendication 1 ou 2, **caractérisé en ce que** la poignée (29) est constituée d'un support (43), en particulier d'un étrier support (24) pour une charge pouvant être fixée sur le support de charge (10), sachant que le support de charge présente de manière appropriée un dispositif de fixation pour la fixation stationnaire du support (43) par rapport au support de base (18) dans la position de retenue (S).

4. Support de charge selon l'une quelconque des revendications précédentes, **caractérisé en ce qu'**il comporte un cadre porteur (21) pour y poser la charge, qui est logé de manière mobile sur le support de base (18) et peut s'éloigner, dans l'état fixé sur la zone arrière (11) du véhicule automobile (12) avec la charge posée, de la zone arrière (11) pour un accès plus aisé à un compartiment à bagages du véhicule automobile (12).

5. Support de charge selon l'une quelconque des revendications précédentes, **caractérisé en ce qu'**au moins un composant d'élargissement (36) comporte une partie porteuse (38) pour l'agrandissement d'une zone de chargement (37) du support de base (18) et/ou **en ce qu'**au moins un composant d'élargissement (36) comporte une rigole support (39) pour le logement d'une roue d'une bicyclette, sachant que le support de charge présente de manière appropriée une paire de rigoles support (41) avec des rigoles support (39) s'alignant sensiblement l'une avec l'autre dans la position de travail (A).

6. Support de charge selon l'une quelconque des revendications précédentes, **caractérisé en ce qu'**au moins un composant d'élargissement (36) comporte une lampe (44) et/ou un support de plaque (48).

7. Support de charge (10) selon l'une quelconque des revendications précédentes, **caractérisé en ce qu'**un palier (25, 40) est disposé sur le support de base (18) pour le logement mobile en pivotement et/ou mobile en coulissement d'au moins un composant d'élargissement (36) et/ou un logement à emboîtement (46) destiné à contenir au moins un composant d'élargissement (36).

8. Support de charge selon l'une quelconque des revendications précédentes, **caractérisé en ce qu'**il présente un dispositif de fixation (13) pour la fixation à un bras (15) d'un attelage (16) du véhicule automobile (12) ou pour la fixation à un support du véhicule automobile (12), en particulier à un logement à emboîtement ou un anneau de remorquage ou un support d'anneau de remorquage.

9. Support de charge selon l'une quelconque des revendications précédentes, **caractérisé en ce qu'**un contour extérieur de la structure d'emballage (27) dans la position de retenue (S) est adapté au moins par section à un contour intérieur d'un espace de retenue côté véhicule du véhicule automobile (12).

10. Support de charge (10) selon l'une quelconque des revendications précédentes, **caractérisé en ce qu'**il forme un élément d'un système de support de charge qui comporte un dispositif d'emballage (60) avec une ouverture, par laquelle la poignée (29) dépasse du dispositif d'emballage (60).

11. Dispositif d'emballage (60) pour un support de charge (10) pour le chargement d'une charge, sachant que le support de charge (10) peut être fixé sur une zone arrière (11) d'un véhicule automobile (12), en particulier d'une voiture particulière et dépasse vers l'arrière à l'état monté de la zone arrière (11) du véhicule automobile (12), et sachant que le support de charge (10) peut être réglé entre une position de travail (A) et une position de retenue (S), sachant que dans la position de travail (A), au moins un composant d'élargissement (36) pouvant être fixé sur le support de base (18) ou disposé de manière mobile sur un support de base (18) dépasse du support de base (18) et sachant qu'au moins un composant d'élargissement (36) est déplacé dans la position de retenue (S) vers le support de base (18) de sorte que le support de charge (10) forme une structure d'emballage (27) qui sollicite une plus petite surface et/ou une plus petite hauteur par rapport à la position de travail (A), sachant que le support de charge (10) présente une poignée (29) de type anse dépassant dans sa position de retenue (S) de la structure d'emballage (27) pour la saisie manuelle, **caractérisé en ce que** le dispositif d'emballage (60) présente une ouverture, par laquelle la poignée (29) du support de charge (10) emballé dépasse du dispositif d'emballage (60), et **en ce que** le dispositif d'emballage (60) présente un ensemble de roues ou de bobines (80) pour faire rouler le support de charge (10) emballé dans le dispositif d'emballage (60), se trouvant dans la position de retenue (S) et/ou **en ce que** le dispositif d'emballage (60) et le support de charge (10) se trouvant dans la position de retenue (S), emballé dans le dispositif d'emballage (60) forme un trolley.

12. Dispositif d'emballage selon la revendication 11, **caractérisé en ce qu'**il présente un support (74), en particulier un ensemble de sangle (75) pour le maintien du support de charge (10) dans la position de retenue (S) et/ou **en ce que** le dispositif d'emballage (60) présente au moins une poche, de préférence une poche intérieure (79) disposée dans un espace intérieur (65) du dispositif d'emballage (60) pour le logement d'un composant du support de charge (10).

13. Véhicule automobile (12), en particulier voiture particulière avec un support de charge (10) selon l'une quelconque des revendications 1 à 10.
